# EUROPEAN PATENT APPLICATION

(11) **EP 2 204 098 A1**
(43) Date of publication of application: **07.07.2010**
(21) Application number: 08022079.1
(22) Date of filing: 19.12.2008
(51) Int. Cl.: A23L 1/22

(54) **Flavour enhancer**

(71) Applicant: Südzucker Aktiengesellschaft Mannheim/Ochsenfurt, 68165 Mannheim (DE)
(72) Inventor: Walter, Thomas, 69242 Mühlhausen (DE)
(74) Representative: Koster, Nico

(57) **Abstract**

The invention relates to the use of lactobionic acid, lactobionic-δ-lactone, a salt of lactobionic acid or a mixture thereof as flavour enhancer, in particular where the flavour that is enhanced is chosen from the group consisting of: acidic flavours, fruit flavours, sweet flavours, savoury flavours, and salt flavours. The invention further relates to a food composition comprising a flavour-enhancing system, **characterised in that** the flavour-enhancing system comprises lactobionic acid, lactobionic-δ-lactone, a salt of lactobionic acid or a mixture thereof.

## Description

The invention relates to a flavour enhancer.

Flavour enhancers are known as such. Examples of known flavour enhancers are: monosodium glutamate (E621), which is often combined with disodium 5'-ribonucleotides (E635); and maltol (E636).

Despite the existence of these and other known flavour enhancers, there remains a need for the provision of further flavour enhancers so that there is more choice in flavour enhancers and in particular so that a flavour-enhancing effect becomes available in yet more conditions.

It is thus the objective of the present invention to provide a further flavour enhancer.

The said objective is achieved by the use of lactobionic acid, lactobionic-δ-lactone, a salt of lactobionic acid or mixtures thereof as flavour enhancer.

An advantage of the present invention is that a flavour-enhancing effect is achieved, which may preferably be utilised in somewhat acidic circumstances.

EP-A-1 443 827 discloses a method for the preparation of a fermented dairy product comprising the steps of: providing a dairy base; contacting the dairy base with a starter culture for fermentation; and adding to the dairy base, prior to or during fermentation, an oxidase, produced by a fungus belonging to the genus *Microdochium,* for conversion of lactose to lactobionic acid to give a fermented dairy product. The fermented dairy product is described to be less firm than conventional yoghurts, as well as less sour.

EP-A-1 452 097 discloses mineral complexes, especially calcium complexes, of lactobionic acid which are especially useful for mineral fortification of food and beverage products. The mineral complex has a clean taste.

As used in the context of the present invention, the term flavour has its common meaning which may be described as the sensory impression of a food or other substance, determined mainly by the chemical senses of taste and smell. A flavour enhancer as meant in the context of the present invention means a compound that, when combined with a flavour-bringing foodstuff or food ingredient and possibly with other food ingredients into a food composition, causes a flavour-intensifying effect of the flavour-bringing compound upon consuming the food composition. The intensifying effect should be different from the own taste, if any, of the flavour enhancer. The taste brought by the flavour enhancer itself may be, and is preferably, of secondary or even negligible importance only.

Lactobionic acid as such is known; one known method of obtaining lactobionic acid is via the selective catalytic oxidation of lactose, as described in for example WO-A-2004 099114. Furthermore, enzymatic preparation is also described, e.g. in EP-A-1 443 827.

As is known, when a molecule such as lactobionic acid has both an alcohol group and a carboxylic acid group it is quite possible that these combine reversibly through an intramolecular ester link - to some extent or even wholly, depending on the conditions such as pH, concentration and temperature - into a cyclic form called a lactone. In the case of lactobionic acid, the most relevant corresponding lactone is a δ-lactone, i.e. a 6-membered ring. Lactobionic acid is a mild organic acid and is highly soluble in water. In aqueous solution, lactobionic acid and its corresponding δ-lactone, commonly referred to as lactobionic-δ-lactone, are typically in an equilibrium which may be influenced by the abovementioned conditions.

Lactobionic acid can form salts with mineral cations such as calcium, potassium, sodium and zinc. Calcium lactobionate may be used as a stabilizer. Potassium lactobionate may be added to organ preservation solutions to provide osmotic support and prevent cell swelling. Mineral salts of lactobionic acid may be used for mineral supplementation.

It was found according to the invention that the flavour that is enhanced by lactobionic acid, lactobionic-δ-lactone, a salt of lactobionic acid or mixtures thereof according to the present invention may be one from the group consisting of: acidic flavours, fruit flavours, sweet flavours, savoury (umami) flavours, and salt flavours.

In one preferred embodiment, a sweet flavour is enhanced. Moreover the use of lactobionic acid, lactobionic-δ-lactone, a salt of lactobionic acid or mixtures thereof can have masking effects such as but not limited to the reduction of the bitter off-taste of otherwise sweet compounds, such as high-intensity sweeteners or natural sweeteners.

In a particularly preferred embodiment, fruit flavours are enhanced. It was found that the fruit flavour enhancement according to the invention is even maintained in case a fruit preparation is mixed with a further food composition such as a dairy product like yoghurt.

In one other preferred embodiment, a savoury flavour is enhanced.

In a further preferred embodiment, an acidic flavour is enhanced, preferably by means of lactobionic acid, lactobionic-δ-lactone or mixtures thereof. As lactobionic acid is an organic acid, it is to be expected that the pH of foodstuffs it is added to may drop. Moreover, it is known that lactobionic acid, lactobionic-δ-lactone and mixtures thereof have an own flavour which is typically described by people as lemon-like. The flavour-enhancing property of lactobionic acid, lactobionic-δ-lactone and mixtures thereof is therefore understood to be not a mere increase in acidity (reduction in pH) in line with its own acidic power (as expressed in pKa); neither is it understood to be the bringing of a slight lemon-like flavour to a food composition. Rather, the flavour-enhancing property lies in the more intensely experienced flavours of other food ingredients with which it is combined. Thus, it was found surprisingly that if a foodstuff has a sour flavour, then combining it with lactobionic acid, lactobionic-δ-lactone, a salt of lactobionic acid or mixtures thereof will intensify the sour (acidic) experience, and will do so beyond its contribution as an acid.

In yet a further preferred embodiment, salty flavours are enhanced.

It was found that lactobionic acid, lactobionic-δ-lactone, a salt of lactobionic acid or mixtures thereof do not lead to a significant enhancement of bitter flavours. This is an advantage of the present invention as bitter flavours are often undesirable. Moreover, it was found that lactobionic acid, lactobionic-δ-lactone, a salt of lactobionic acid or mixtures thereof are even capable of masking bitter flavours. One example of such masking of bitter flavours is the use of lactobionic acid, lactobionic-δ-lactone, a salt of lactobionic acid or mixtures thereof in combination with Stevia extracts, of which it is known that they show a bitter off-taste. The bitter off-taste is even noted for some Stevia-derived products like high-purity Rebaudioside A.

The amount of lactobionic acid, lactobionic-δ-lactone, a salt of lactobionic or mixtures thereof that may be incorporated into a food composition in order to benefit from its flavour-enhancing properties may vary within wide ranges, and lies preferably between 0.01 wt.% and 99 wt.%, based on the whole of the food composition. Preferably, the amount of lactobionic acid, lactobionic-δ-lactone, a salt of lactobionic acid or mixture thereof that is incorporated into a food composition is at least 0.05, 0.10, 0.25, 0.50, or 1.00 wt.%, based on the whole of the food composition. Preferably the amount of lactobionic acid, lactobionic-δ-lactone, a salt of lactobionic acid or mixture thereof that is incorporated into a food composition is at most 95, 85, 75, 65, 55, 45, 40, 35, 30, 25, 20, 15, or 10 wt.%, based on the whole of the food composition. Dosages of lactobionic acid, lactobionic-δ-lactone, a salt of lactobionic acid or mixtures thereof in amounts of 5 or 10 wt.% to 99 wt.% are often suitable for use in concentrates, table top sweeteners, and salt replacements. Moreover, it was found that the said high dosages of lactobionic acid, lactobionic-δ-lactone, a salt of lactobionic acid or mixtures thereof can be associated with its use as a carrier, for example a carrier of aroma's.

If lactobionic acid is used as such, then it may be - as explained above - that this use leads inevitably to the formation of lactobionic-δ-lactone. In that case, the ratio between lactobionic acid and lactobionic-δ-lactone is determined at least partly by the specific conditions of use. By analogy, the use of lactobionic-δ-lactone as such may lead to the formation of lactobionic acid. The said formation and subsequent presence of lactobionic-δ-lactone or lactobionic acid are understood to be according the use of the present invention.

If a mixture of lactobionic acid, lactobionic-δ-lactone and a salt of lactobionic acid is used then the weight ratio of, one the one hand, the sum of lactobionic acid and lactobionic-δ-lactone to, on the other hand, the salt of lactobionic acid in the mixture, lies preferably between 1:10 and 10:1.

The invention further relates to a food composition or a feed composition comprising a flavour-enhancing system, wherein the flavour-enhancing system comprises lactobionic acid, lactobionic-δ-lactone, a salt of lactobionic acid or a mixture thereof. It is noted hereby that the presence of lactobionic acid, lactobionic-δ-lactone, a salt of lactobionic acid or a mixture thereof in the flavour-enhancing system should be such that they contribute significantly or even wholly to the flavour-enhancing effects of the flavour-enhancing system; the said compounds are part of the flavour-enhancing system as flavour-enhancers. Nevertheless it is quite possible that the flavour-enhancing system further comprises other compounds such as for example organic acids other than lactobionic acid, such as gluconic acid and citric acid, and/or their salts such as gluconates or citrates.

In one preferred embodiment of the food composition according to the invention, the food composition comprises fruit or a fruit-derived composition such as strawberries.

In a preferred embodiment of the invention, the addition of lactobionic acid, lactobionic-δ-lactone, a salt of lactobionic acid or a mixture thereof to a foodstuff is combined with the addition of a prebiotic compound, preferably a fructan, in particular inulin. This has the advantage that inulin may be used in foodstuffs that need a rather acidic flavour without having to resort to reduction of the pH to very low values, which may be detrimental to the prebiotic compound. As is known, prebiotic compounds such as fructans are sensitive to hydrolysis at low pH values, thereby potentially reducing their effectiveness as prebiotic. The term inulin is understood herein to encompass also oligofructose and fructooligosaccharide.

In a further preferred embodiment of the invention, the food composition comprises a nutritive sweetener, a low-calorie bulk sweetener, and/or a fibre, preferably a soluble fibre. Examples of nutritive sweeteners are sucrose, fructose, and sucrose isomers such as isomaltulose, trehalulose, and leucrose. Examples of low-calorie bulk sweeteners are isomalt, erythritol, xylitol, and polydextrose. Examples of fibres are resistant dextrins/maltodextrins such as for example Nutriose; oligosaccharides such as for example galactooligosaccharides and fructooligosaccharides; and fructans such as inulin.

It is a rather common property of many nutritive sweeteners, bulk sweeteners, low-calorie bulk sweeteneres and fibres that their sweetening power is somewhat less than that of sucrose. However by combining these compounds according to the invention with lactobionic acid, lactobionic-δ-lactone, a salt of lactobionic acid or a mixture thereof, a strengthening of the sweetening power of the nutritive/bulk sweeteners can be perceived by the consumer, thus significantly increasing the attractiveness of the said sweeteners.

In another preferred embodiment of the invention, the food composition comprises rice or a derivative from rice such as rice bran, rice oil, rice protein or rice starch. One example of such a food composition are rice starch-based chips having a savoury flavour that is enhanced by lactobionic acid, lactobionic-δ-lactone, a salt of lactobionic acid or a mixture thereof.

The pH of the food composition according to the invention may vary within wide ranges. It is preferred, however, that the said pH has a value lying between t 2 and 8, preferably between 2.5 or 3.0 and 7, more preferably below 6, 5, or 4.5. It was found that the flavour enhancement according to the invention is even better noticeable in case the food composition as a whole is somewhat acidic in nature.

The invention is illustrated with the Examples as provided below, without being limited thereto. If in the Examples the use of lactobionic acid is disclosed, then this should be interpreted to also mean the use of a mixture of lactobionic acid and lactobionic-δ-lactone, should the conditions of the use lead to such a mixture.

### Example 1 and Comparative Experiment 1 - Fruit Preparation

Strawberries were mashed, mixed with sugar (sucrose) and then heated to the boiling point. Separately, a solution of pectin in water was made and heated to 80°C; the pectin solution was th en added to the strawberries. In the Example, lactobionic acid was added. In the Comparative Experiment, no lactobionic acid was added. The so-formed fruit preparation was kept boiling until excess water was vaporized, then allowed to cool. The final composition of the fruit preparations is given in Table 1.

**Table 1**

| | Example | Comparative Experiment 1 |
|---|---|---|
| Strawberry | 50.0 | 50.0 |
| Sucrose | 30.0 | 30.0 |
| Pectin (LM104AS) | 0.5 | 0.5 |
| Lactobionic acid | - | 1.0 |
| Water | 19.5 | 18.5 |
| pH | 3.72 | 3.49 |

| | | |
|---|---|---|
| All ingredient amounts are given in weight % | | |

The fruit preparation of Example 1 was tasted by a taste panel and compared with the fruit preparation of Comparative Experiments 1 and 2. The taste panel concluded that the fruit preparation according to the invention tasted slightly more acidic and significantly fruitier than that of Comparative Experiment 1.

From these data it follows that lactobionic acid shows a remarkable flavour-enhancing capacity.

### Example 2 and Comparative Experiment 2 - Fruit Yogurt

The fruit preparations of Example 1 and Comparative Experiment 1 were added to yoghurt (15 wt.% fruit preparation, 85 wt.% yoghurt). The fruit yoghurts so prepared were measured on pH and tasted by a taste panel. The taste panel concluded that the fruit yoghurt according to the invention (pH 4.24) tasted slightly more acidic and significantly fruitier than that of Comparative Experiment 2 (pH 4.31).

### Example 3 - Cola

A sample of a commercially available cola drink (supplier: Coca-Cola^{®}) was taken. To the sample, 1.2 wt.% lactobionic acid was added. Subsequently, the pH was measured and the drink evaluated by a taste panel. The taste panel compare the cola drink with the unmodified Coca-Cola. The result was that although the pH remained virtually the same (2.57, compared to 2.60 for the Coca-Cola as such), the drink was perceived by the taste panel as being more acidic. Also, a slight lemon-like taste was found in the drink of Example 3, absent in the reference drink.

This result confirms that lactobionic acid intensifies the perception of acidic tastes. This opens the way towards the creation of foodstuffs such as drinks that taste more acidic than they actually are. As a result, negative effects of highly acidic foodstuffs such as tooth decay may be reduced or even eliminated.

### Example 4 and Comparative Experiment 3 - White Bread

White bread was prepared in an as such known procedure by mixing ingredients as listed in Table 2 during three minutes, followed by kneading during 7 minutes to form a dough. Subsequently the dough was left to rest during 20 minutes. Then, portions of 420 grams were taken, rounded and moulded, and left for a final proofing during 50 minutes. Finally, the white breads were prepared by baking the dough during 40 minutes at 210°C. The amounts of the ingredients used are given in Table 2.

**Table 2**

| | Example 4 | Comparative Experiment 3 |
|---|---|---|
| Flour | 60.06 | 60.75 |
| Shortening | 0.60 | 0.61 |
| Yeast | 1.80 | 1.82 |
| Salt | 0.96 | 0.97 |
| Improver (S500, supplier: Puratos) | 0.60 | 0.61 |
| Water | 34.83 | 35.24 |
| Lactobionic acid | 1.14 | - |

| | | |
|---|---|---|
| All ingredient amounts are given in weight % | | |

The breads so baked were given to a taste panel. Compared to the bread of Comparative Experiment 3, the taste panel found the flavour of the bread of Example 3 to be more salty - even though the bread did not contain more salt.

## Claims

1. Use of lactobionic acid, lactobionic-δ-lactone, a salt of lactobionic acid or a mixture thereof as flavour enhancer.

2. Use of lactobionic acid, lactobionic-δ-lactone, a salt of lactobionic acid or a mixture thereof according to claim 1, wherein the flavour that is enhanced is chosen from the group consisting of: acidic flavours, fruit flavours, sweet flavours, savoury flavours, and salt flavours.

3. Use according to claim 2, wherein lactobionic acid, lactobionic-δ-lactone, a salt of lactobionic acid or a mixture thereof are simultaneously used as flavour masking agent with respect to bitter flavours.

4. Food composition comprising a flavour-enhancing system, **characterised in that** the flavour-enhancing system comprises as flavour-enhancer at least lactobionic acid, lactobionic-δ-lactone, a salt of lactobionic acid or a mixture thereof.

5. Food composition according to claim 4, wherein the flavour-enhancing system further comprises an organic acid other than lactobionic acid and/or a salt of the organic acid other than lactobionic acid.

6. Food composition according to claim 4 or 5, wherein the lactobionic acid, lactobionic-δ-lactone, salt of lactobionic acid or a mixture thereof is present in an amount lying between 0.01 and 99 wt.%

7. Food composition according to any one of claims 4 - 6, comprising fruit or a fruit-derived composition.

8. Food composition according to any one of claims 4 - 7, comprising at least one of: sucrose, a nutritive sweetener or bulk sweetener or low-calorie sweetener other than sucrose, a fibre, a prebiotic fibre, and a rice derivative.

9. Food composition according to any one of claims 4 - 8, wherein the pH of the food composition lies between 2 and 8.

10. Food composition according to any one of claims 4 - 9, wherein the food composition is a drink.
